# EUROPEAN PATENT APPLICATION

(11) **EP 4 716 204 A1**
(43) Date of publication of application: **25.03.2026**
(21) Application number: 25203081.2
(22) Date of filing: 18.09.2025
(51) Int. Cl.: H04N 1/00, G06F 3/12

(54) **INFORMATION PROCESSING APPARATUS, METHOD FOR CONTROLLING THE INFORMATION PROCESSING APPARATUS, AND PROGRAM**

(30) Priority: 24.09.2024 JP 2024164860
(71) Applicant: Canon Kabushiki Kaisha, Tokyo, 146-8501 (JP)
(72) Inventor: WATARIUCHI, Satoki, Tokyo, 146-8501 (JP)
(74) Representative: Canon Europe Limited

(57) **Abstract**

According to the present disclosure, an information processing apparatus (100) includes a drive unit (101) and a display unit (211). In the information processing apparatus, based on an instruction to retry a job that is being executed by the drive unit, processing of the drive unit in accordance with the job is cancelled, and information about the retrying of the job is displayed by the display unit. Based on an instruction to start the retrying of the job, the job is retried.

## Description

### TECHNICAL FIELD

The present disclosure relates to an information processing apparatus, a method for controlling the information processing apparatus, and a program.

### BACKGROUND

An information processing apparatus includes a physical driver and performs (e.g., executes/realizes) a function by controlling the driver. For example, an image forming apparatus includes drivers (e.g. components or elements) such as a scanner and a printer. The image forming apparatus performs a copy function by reading (e.g., scanning) an original material (e.g., source, or input, document) with the scanner to generate image data and printing the image data on a sheet using the printer.

With the image forming apparatus, a user may cancel execution of a job for various reasons and redo the execution of the job. For example, Japanese Patent No. 6750553 proposes a technique in which cancellation of execution of a job is utilized when the job is incorrectly set.

When the job is incorrectly set, the job setting is corrected and the corrected job is re-executed. Meanwhile, the job may be cancelled and re-executed even when the job is correctly set. This may happen when, for example, an original is left behind, an original is placed in an incorrect direction, or the sides of a placed original are incorrect.

In such cases, the user instructs to cancel the job, and then, waits for completion of the cancellation of the job. When the cancellation of the job is completed and execution of a new job is ready to be executed, the user corrects the state of the original and causes the job to be re-executed.

When the job is cancelled in the image forming apparatus, it is necessary to stop the drivers such as a scanner and a printer. The time needed to stop the drivers can lead to a delay in the completion of the cancellation.

Consequently, a problem arises when processing the redoing (e.g., re-executing) of a job, in an information processing apparatus including such drivers, in that the user is caused to wait during the cancellation. This is because, during the cancellation process, the user is unable to take any action, which they may find frustrating and inconvenient.

### SUMMARY

The present disclosure in its first aspect provides an information processing apparatus comprising a drive unit, and a display unit, wherein, based on an instruction to redo a job that is being executed by the drive unit, processing of the drive unit in accordance with the job is cancelled, and information about the redoing of the job is displayed by the display unit, and wherein, based on an instruction to start the redoing of the job, the job is redone.

The present disclosure in its second aspect provides a method the method comprising: based on an instruction to redo a job that is being executed by a drive unit, cancelling processing of the drive unit in accordance with the job and displaying information about the redoing by a display unit, and, based on an instruction to start the redoing of the job, redoing the job.

Advantageously, the present disclosure allows the user of an information processing apparatus including a driver to perform an operation for redoing (e.g., re-executing) a process of the information processing apparatus even when a cancellation process is being executed. Thus, usability of the information processing apparatus is improved.

The present disclosure in its third aspect provides a program as specified in claim 10.

Optional features will now be set out. These are applicable singly or in any combination with any aspect of the disclosure.

Optionally, during the execution of the job, the display unit displays a cancel button configured to cancel the job and a redo button configured to redo the job.

Optionally, the display unit uses a single button to display the cancel button and the redo button.

Optionally, the display unit provides a display that allows selection of a job to be redone from a plurality of options of jobs to be redone.

Optionally, based on a result of the selection of the job to be redone, information on the selected job and/or a job to be executed after the selected job is displayed by the display unit.

Optionally, based on the instruction to start the redoing of the job, the selected job and/or the job to be executed after the selected job is redone.

Optionally, the information processing apparatus comprises a scanner unit and/or a printer unit.

Optionally, the scanner unit or the printer unit is used for the job.

Optionally, the job is an ID card copy job.

Optionally, the job is to scan or copy a front side and a rear side of the ID card.

Optionally, the plurality of options are jobs to scan or copy one of the front side and the rear side of the ID card.

According to embodiments of the present disclosure, the driver unit and the display unit may each comprise means for controlling (e.g., a controller) components of the image processing apparatus. For example, the drive unit may be configured to control a driver for executing a job (e.g., a scanner or printer device), and the display unit may be configured to control a display for displaying information (e.g., to a user). It will be appreciated that at least one, or each, of the driver and display may be arranged integrally or externally to the image processing apparatus.

In embodiments, the term 'redo' (or redoing, redone) refers to the act of performing/executing a job again from the beginning (e.g., with the image processing apparatus configured in substantially the same job setting). In this way these terms refer to restarting, re-executing, or repeating the same job that has been instructed previously.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating a hardware configuration of an image forming apparatus.
Fig. 2 is a block diagram illustrating a software configuration of an image forming apparatus.
Fig. 3A and 3B are a flowchart illustrating processing by the image forming apparatus according to Embodiment 1.
Fig. 4 illustrates an example of an operation unit of the image forming apparatus according to Embodiment 1.
Figs. 5A and 5B are a flowchart illustrating processing by an image forming apparatus according to Embodiment 2.
Fig. 6 illustrates an example of the operation unit of the image forming apparatus according to Embodiment 2.
Figs. 7A to 7C are a flowchart illustrating processing by an image forming apparatus according to Embodiment 3.
Fig. 8 illustrates an example of the operation unit of the image forming apparatus according to Embodiment 3.

### DESCRIPTION OF THE EMBODIMENTS

Hereinafter, embodiments of the present disclosure will be described in detail in an exemplifying manner with reference to the drawings. However, elements described in the embodiments are only examples, and it is not intended that the scope of the present disclosure be limited to the elements.

### Embodiment 1

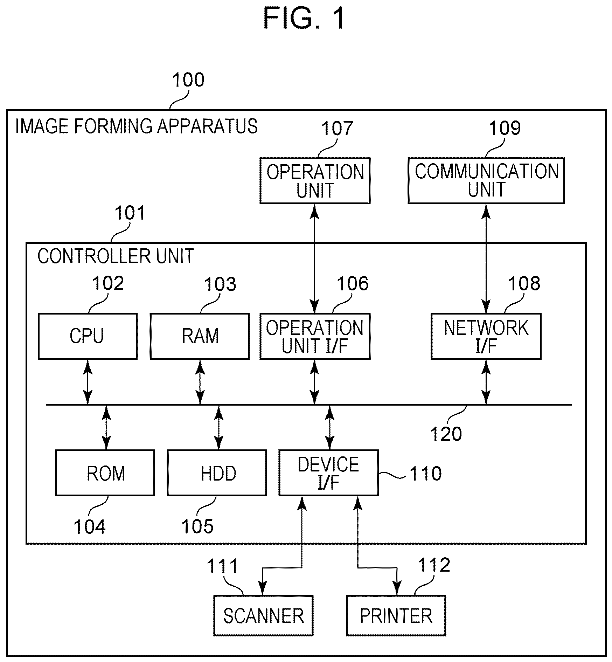

Fig. 1 is a block diagram illustrating a hardware configuration of an image forming apparatus 100 according to the present embodiment.

The image forming apparatus 100 includes a controller unit 101 that controls a scanner 111, a printer 112, an operation unit 107, and a communication unit 109. When a user uses a copy function, the controller unit 101 controls the scanner 111 to acquire image data of an original (e.g., original material, source document or input item) and controls the printer 112 to print and output an image on a sheet of paper. In embodiments, the controller unit 101 (or controller) may define a "drive unit" configured to drive one or more drivers (e.g., the scanner 111, and printer 112) of the image forming apparatus.

When a user uses a scan function, the controller unit 101 controls the scanner 111 to acquire image data of an original, converts the image data to code data, and transmits the code data to an external apparatus (not illustrated) via the communication unit 109. Execution instructions of processing in these functions are referred to as jobs. The image forming apparatus 100 executes the predetermined processing in accordance with the jobs corresponding to the respective functions.

The controller unit 101 includes a central processing unit (CPU) 102, a random-access memory (RAM) 103, a read-only memory (ROM) 104, a hard disk drive (HDD) 105, an operation unit interface (I/F) 106, a network I/F 108, and a device I/F 110. These components of the controller unit 101 are connected via a system bus 120.

The CPU 102 is configured to control the entirety of a system of the image forming apparatus 100. The RAM 103 is a system work memory for operation of the CPU 102 and also an image memory for temporary storage of the image data. Furthermore, an operating system, programs such as system software and application software, and data are disposed in the RAM 103.

The RAM 103 also stores scanned image data read by the scanner 111 and print data received from a data processing apparatus 101 via a network 103. A boot program of the system is stored in the ROM 104. The HDD 105 stores the operating system, the system software, the application software, the print data, setting data, and the like.

The operation unit I/F 106 is an interface unit with the operation unit 107 and is configured to output information to be displayed in the operation unit 107 to the operation unit 107. The operation unit I/F 106 is also configured to accept information input by the user with the operation unit 107.

The network I/F 108 is connected to the communication unit 109 and configured to control various types of communication with the external apparatus. The device I/F 110 is connect the scanner 111 and the printer 112, which executes reading and printing of the image data, and the controller unit 101 to each other to input and output the image data.

The scanner 111 includes an original table (e.g., a scanning surface, bed, or document table) and is configured to read the original material placed on the original table to generate the image data.

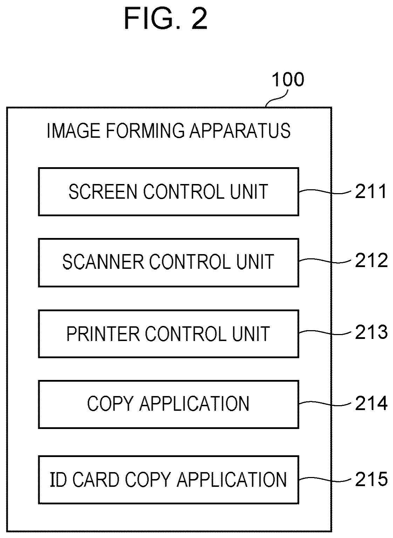

Fig. 2 is a block diagram illustrating a software configuration of the image forming apparatus 100 according to the present embodiment. Blocks illustrated in Fig. 2 are software stored in the ROM 104 or the HDD 105. The CPU 102 reads the software into the RAM 103 and executes the software to realize processing illustrated in flowcharts, which will be described later.

A screen control unit 211 (e.g., a display unit) is configured to control the operation unit 107 via the operation unit I/F 106. The screen control unit 211 is configured to accept (e.g., receive) the information input at the operation unit 107 by the user and generate a screen to be displayed in the operation unit 107.

A scanner control unit 212 is configured to control the scanner 111 via the device I/F 110 and read the original placed on the original table to generate the image data.

A printer control unit 213 is configured to control the printer 112 via the device I/F 110, print the image data on the sheet, and output the image data on the sheet.

A copy application 214 realizes the copy function.

An identification (ID) card copy application 215 realizes an ID card copy function. The ID card copy function is the function of scanning the front and rear sides of an ID card and outputting the scanned content onto a single sheet. Although the ID card copy function is assumed to be an independent application according to the present embodiment, this is only an example. The ID card copy function is not limited to this. The ID card copy function may be prepared as one of functions of the copy application.

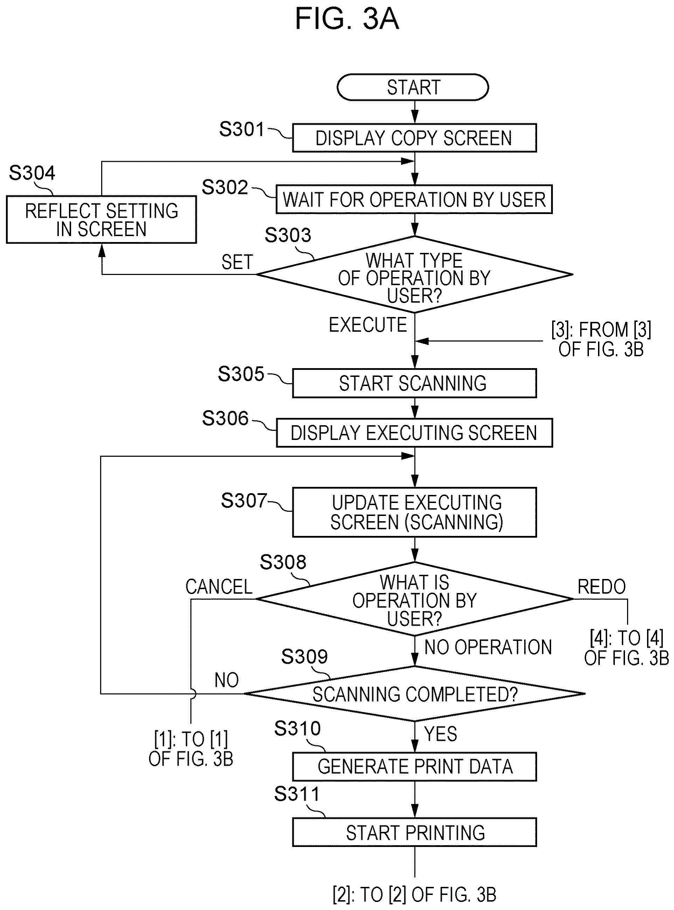

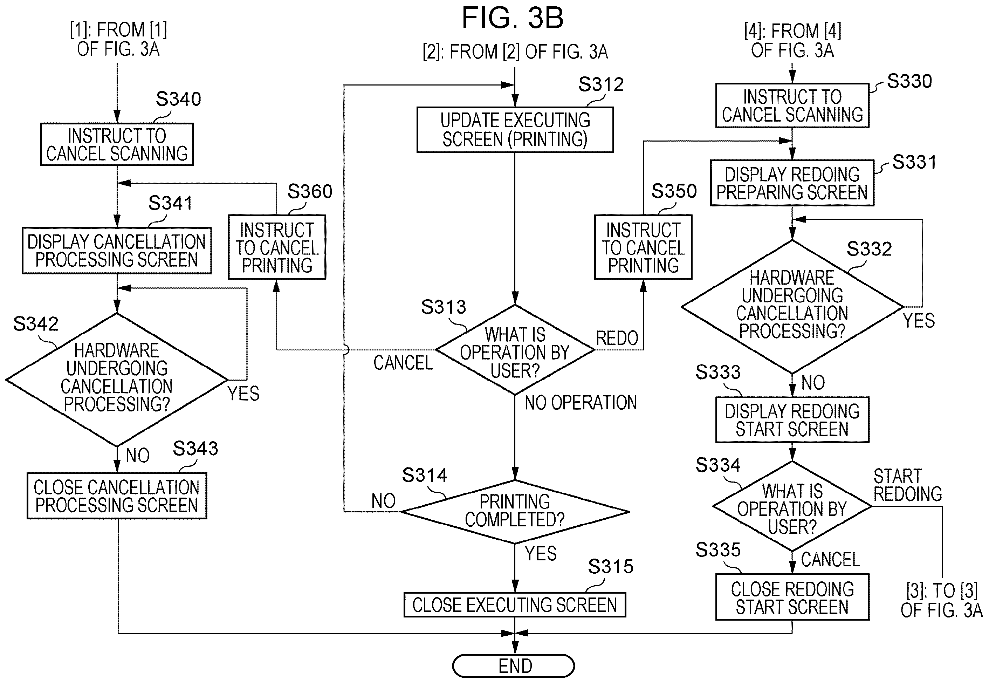

Figs. 3A and 3B are a flowchart illustrating processing by the copy function executed by the image forming apparatus 100 according to the present embodiment. The flowchart illustrated in Figs. 3A and 3B is realized when the CPU 102 of the image forming apparatus reads programs for realizing software modules stored in the ROM 104 or HDD 105 to the RAM 103 and executes the read programs.

The flowchart illustrated in Figs. 3A and 3B starts when the screen control unit 211 detects that calling of the copy application 214 is instructed by the user in a menu screen (not illustrated) displayed in the operation unit 107 of the image forming apparatus 100 and starts up the copy application 214.

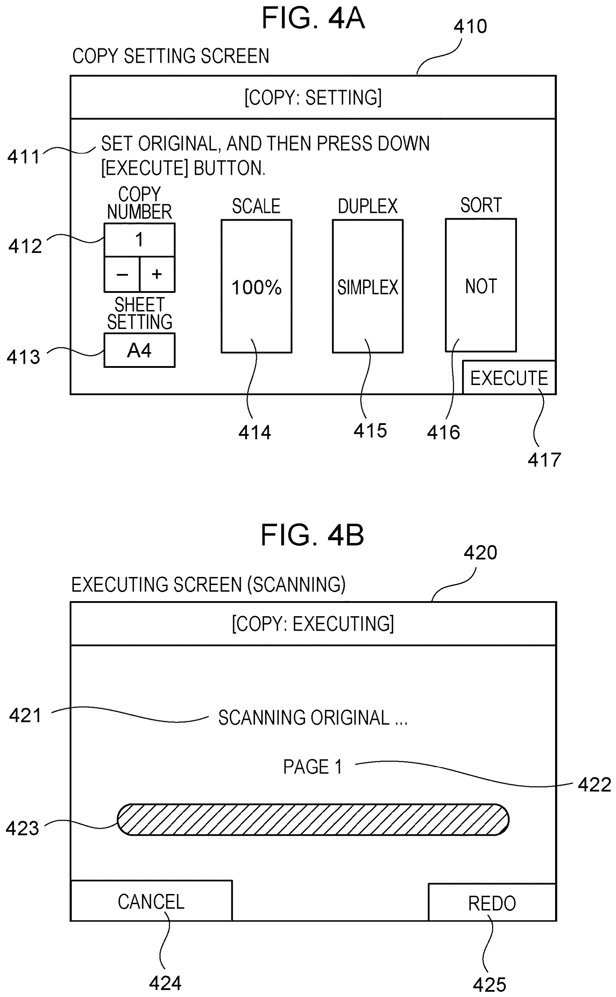

In S301, the copy application 214 displays a copy setting screen 410 illustrated in Fig. 4A in the operation unit 107 via the screen control unit 211. The copy setting screen 410 a message area 411, a copy number setting 412, a sheet size setting 413, a scale setting 414, a duplex setting 415, a sort setting 416, and an execute button 417. In the message area 411, a message helpful for the operation by the user is displayed.

The copy number setting 412 is a component for displaying the setting of the number of copies and setting the number of copies. The user uses a "+" button and a "-" button to change the setting of the number of copies. The sheet size setting 413 is a component for displaying the setting of the print sheet size and setting the print sheet size.

The sheet size setting 413 uses a button. When the button is pressed down, a screen (not illustrated) for selecting the print sheet size is displayed. The scale setting 414 is a component for displaying the setting of the scale and setting the scale. The scale setting 414 uses a button. When the button is pressed down, a screen (not illustrated) for selecting a scale setting value is displayed. The duplex setting 415 is a component for displaying duplex setting and setting duplexing. The duplex setting 415 uses a button. When the button is pressed down, a screen (not illustrated) for selecting a duplex setting value is displayed.

The sort setting 416 is a component for displaying the setting of sort and setting the sort. The sort setting 416 uses a button. When the button is pressed down, a screen (not illustrated) for selecting a sort setting value is displayed.

Referring back to the description of the flowchart, in S302, the copy application 214 waits for operation by the user via the screen control unit 211. When the detected type of the operation by the user is "SET" in S303, the copy application 214 causes the processing to proceed to S304. When the detected type of the operation by the user is "EXECUTE", the copy application 214 causes the processing to proceed to S305.

When the type of the operation by the user is "SET", for example, the following operation for the copy function is performed: an increase/decrease in the number of copies at the copy number setting 412, selection of the sheet size in a screen (not illustrated) after the sheet size setting 413 has been pressed down, or the like. In S304, the copy application 214 reflects the setting value having been set by the operation by the user in the screen and returns to S302.

When the type of the operation by the user is "EXECUTE", this operation corresponds to pressing down of the execute button 417.

For example, in addition to the pressing down of the execute button 417, a physical execute button provided in an operation unit 107 may be pressed down. In S305, the copy application 214 starts scanning with the scanner 111 via the scanner control unit 212. In S306, the copy application 214 displays an executing screen in the operation unit 107 via the screen control unit 211.

An executing screen 420 illustrated in Fig. 4B is an example of the executing screen and displayed during execution of the scanning. The executing screen 420 includes a message area 421, a page display area 422, a progress bar 423, a cancel button 424, and a redo button 425. In the message area 421, a message indicating the situation during execution is displayed. The page display area 422 displays a currently reading page number.

The progress bar 423 indicates the progress of the job and is updated as needed in accordance with the progress. The cancel button 424 is configured to instruct to cancel the job. The redo button 425 is configured to instruct to redo(retry) the job. Here, redoing(retrying) means performing of the job from the beginning in the same job setting.

Examples of a case where the user desires to redo may include a case where the execute button 417 is pressed down to start a job without placing the original (e.g., in the correct position to be scanned). Another example is a case where the front and rear sides are reversed when the original is placed (e.g., on the original table). In such cases, when the user instructs the apparatus to redo the job, the current job can be canceled and the job can be executed again with an original placed correctly.

Referring back to the description of the flowchart, in S307, the copy application 214 updates the executing screen 420 in accordance with the progress of the scanning. For example, the page display area 422 is updated to the currently reading page number and the progress bar 423 is updated in accordance with the current progress.

In S308, the copy application 214 determines the operation by the user via the screen control unit 211. When the cancel button 424 is pressed down, the copy application 214 causes the processing to proceed to S340. When the redo button 425 is pressed down, the copy application 214 causes the processing to proceed to S330. When no operation is performed, the copy application 214 causes the processing to proceed to S309.

In S309, the copy application 214 determines whether the scanning started in S305 has been completed via the scanner control unit 212. When the scanning has been completed, the copy application 214 causes the processing to proceed to S310. Otherwise, the copy application 214 causes the processing to return to S307.

In S310, the copy application 214 generates data for printing from the image data acquired by the scanning. In S311, the copy application 214 starts printing with the printer 112 via the printer control unit 213. In S312, the copy application 214 updates the executing screen in accordance with a printing situation.

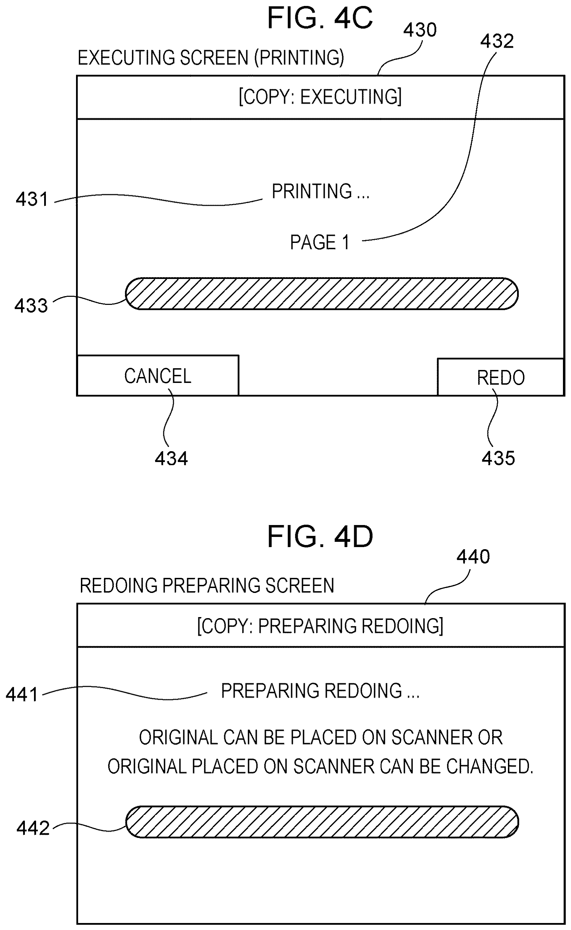

An executing screen 430 illustrated in Fig. 4C is an example of the executing screen displayed during the printing. The executing screen 430 includes a message area 431, a page display area 432, a progress bar 433, a cancel button 434, and a redo button 435. In the message area 431, a message indicating the situation during execution is displayed. The page display area 432 displays a currently printing page number.

The progress bar 433 indicates the progress of the job and is updated as needed in accordance with the progress. The cancel button 434 is configured to instruct to cancel the job. The redo button 435 is configured to instruct to redo the job.

In S313, the copy application 214 determines the operation by the user via the screen control unit 211. When the cancel button 434 is pressed down, the copy application 214 causes the processing to proceed to S360. When the redo button 435 is pressed down, the copy application 214 causes the processing to proceed to S350. When no operation is performed, the copy application 214 causes the processing to proceed to S314.

In S350, the copy application 214 instructs the printer 112 to cancel the printing via the printer control unit 213 and causes the processing to proceed to S331. The processing in and after S331 will be described later.

In S360, the copy application 214 instructs the printer 112 to cancel the printing via the printer control unit 213 and causes the processing to proceed to S341. The processing in and after S341 will be described later.

In S314, the copy application 214 determines whether the printing started in S311 has been completed via the printer control unit 213. When the printing has been completed, the copy application 214 causes the processing to proceed to S315. Otherwise, the copy application 214 causes the processing to return to S312.

In S315, the copy application 214 closes the executing screen 430 and the flowchart ends.

Meanwhile, in S330, the copy application 214 instructs the scanner 111 to cancel the scanning via the scanner control unit 212. The scanner 111 is hardware including a driver. The scanner 111 is not necessarily ready to re-execute immediately depending on timing even when the cancellation is instructed.

For example, in the case of a pressing plate, an image sensor that linearly reads the original is moved from end to end so as to read the original placed on the original table. When receiving the instruction to cancel during the scanning, the scanner 111 is requested to perform cancellation processing in which the image sensor is safely stopped and returned to the original position.

In S331, the copy application 214 displays a redoing preparing screen 440 illustrated in Fig. 4D in the operation unit 107 via the screen control unit 211. The redoing preparing screen 440 includes a message area 441 and a progress bar 442.

The message area 441 is configured to display that the redoing is being prepared. The message area 441 also displays operation able to be performed by the user for the redoing. When watching a message in the message area 441, the user can place or change the original while the scanner 111 is performing the cancellation processing.

In S332, the copy application 214 determines whether the hardware such as the scanner 111 and the printer 112 are performing cancellation processing. When the cancellation processing is being performed, the copy application 214 waits for the completion of the cancellation processing. When the cancellation processing has been completed, the copy application 214 causes the processing to proceed to S332.

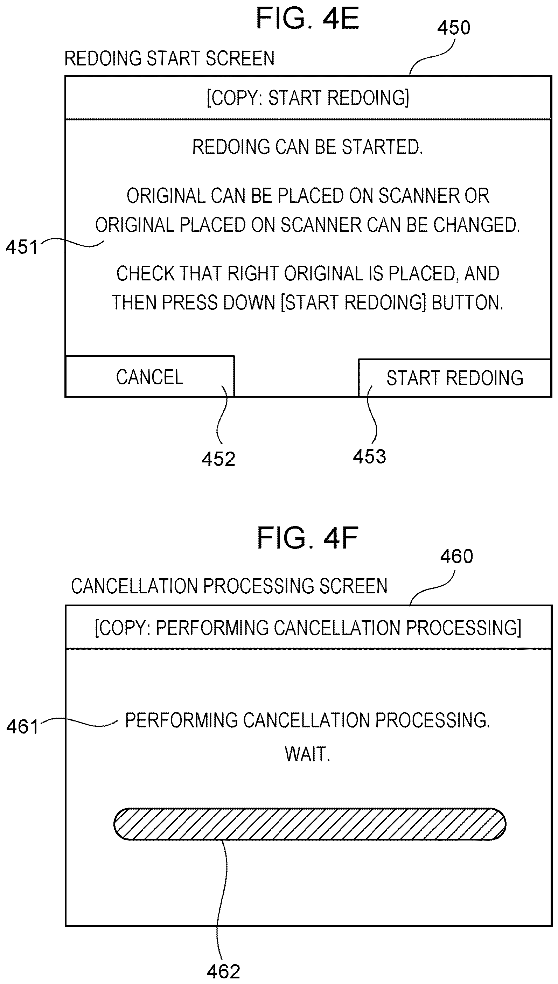

In S333, the copy application 214 displays a redoing start screen 450 illustrated in Fig. 4E in the operation unit 107 via the screen control unit 211. The redoing start screen 450 includes a message area 451, a cancel button 452, and a start redoing button 453. The message area 451 is configured to display that the redoing can be started. The message area 451 also displays operation able to be performed by the user for the redoing.

The cancel button 452 is configured to instruct to cancel the redoing and end the job. The start redoing button 453 is configured to instruct to start the redoing of the job.

In S334, the copy application 214 determines the operation by the user via the screen control unit 211. When the cancel button 452 is pressed down, the copy application 214 causes the processing to proceed to S335. When the start redoing button 453 is pressed down, the copy application 214 causes the processing to proceed to S305 and the scanning is started.

In S335, the copy application 214 closes the redoing start screen 450 and the flowchart ends.

Meanwhile, in S340, the copy application 214 instructs the scanner 111 to cancel the scanning via the scanner control unit 212. In S341, the copy application 214 displays a cancellation processing screen 460 illustrated in Fig. 4F in the operation unit 107 via the screen control unit 211. The cancellation processing screen 460 includes a message area 461 and a progress bar 462. The message area 461 is configured to display that the cancellation processing is being performed. The progress bar 462 indicates the progress of the cancellation processing.

In S342, the copy application 214 determines whether the hardware such as the scanner 111 and the printer 112 are performing cancellation processing. When the cancellation processing is being performed, the copy application 214 waits for the completion of the cancellation processing. When the cancellation processing has been completed, the copy application 214 causes the processing to proceed to S343.

In S343, the copy application 214 closes the cancellation processing screen 460 and the flowchart ends.

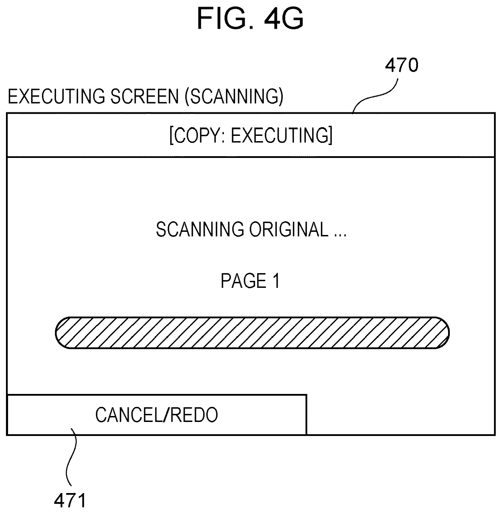

Although the cancel button and the redo button are separately provided in the executing screens 420 and 430 according to the present embodiment, only a single button may be prepared to serve as the cancel button and the redo button. Fig. 4G illustrates an example of a screen in which only a single button is prepared in an executing screen 470. The executing screen 470 includes a cancel/redo button 471. When the cancel/redo button 471 is pressed down, the same processing as the processing performed by pressing down the redo button in the present embodiment is performed.

When the cancellation or the redoing is selected in the redoing start screen 450, processing desired by the user can be performed. When the number of buttons in the executing screen is reduced, operation errors by the user can be reduced. Regarding the cancel/redo button 471, although the caption of the button is expressed as "Cancel/Redo" for ease of understanding as the example, this is not limiting. Only "Cancel" may be simply displayed.

As has been described, according to the present embodiment, the message for redoing is displayed for the user during the cancellation processing as in S331 to S333 illustrated in Fig. 3B. This allows the user to perform operation for redoing even during the cancellation processing, and accordingly, the usability is improved.

### Embodiment 2

According to Embodiment 1, the redoing preparing screen 440 is displayed while the cancellation processing of the scanning or the printing is being performed in response to reception of the redoing instruction, and the redoing start screen 450 is displayed after the cancellation processing has been completed. Thus, the user can perform operation for redoing (for example, placing of the original) during the cancellation processing. However, when the cancellation processing continues even after the completion of the operation, it is necessary to wait for the completion of the cancellation processing to instruct to start of redoing.

Thus, according to Embodiment 2, an embodiment is described in which the start of redoing can be instructed without waiting for the completion of the cancellation processing.

Embodiment 2 is a variation of Embodiment 1. Thus, only the difference between the embodiments is described.

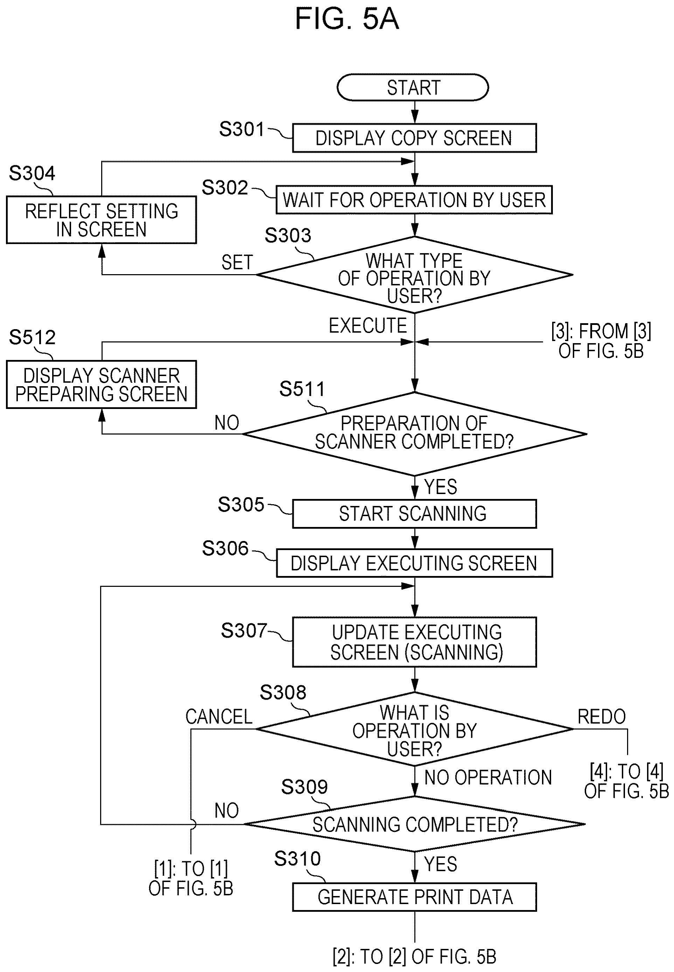

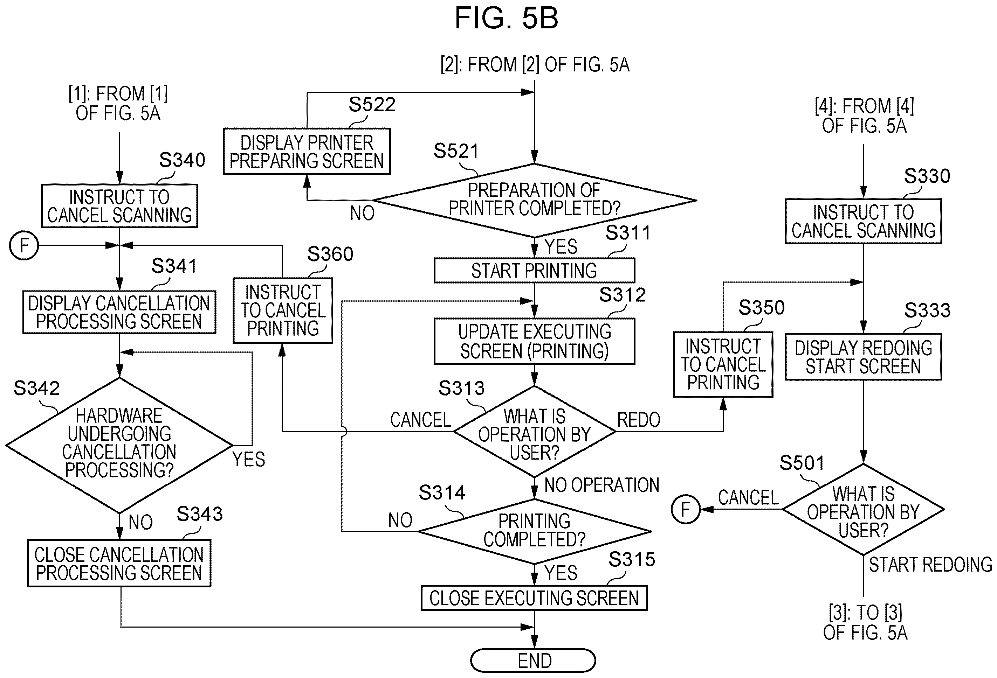

Figs. 5A and 5B are a flowchart illustrating processing by the copy function executed by the image forming apparatus 100 according to the present embodiment. Figs. 5A and 5B are a variation of the flowchart illustrated in Figs. 3A and 3B. Thus, only the difference between Figs. 3A and 3B and Figs. 5A and 5B is described. The flowchart illustrated in Figs. 5A and 5B is realized when the CPU 102 of the image forming apparatus reads the programs for realizing the software modules stored in the ROM 104 or HDD 105 to the RAM 103 and executes the read programs.

The copy application 214 causes the processing to proceed to S333 after the processing in S330 and S350. Referring to the flowchart illustrated in Fig. 3B, the copy application 214 waits for the completion of the cancellation processing for the hardware in S331 to S332. In the flowchart according to the present embodiment, the redoing start screen 450 is displayed in S333 without waiting for the cancellation processing for the hardware.

In S501, the copy application 214 determines the operation by the user via the screen control unit 211. When the cancel button 452 is pressed down, the copy application 214 causes the processing to proceed to S341. When the start redoing button 453 is pressed down, the copy application 214 causes the processing to proceed to S511.

In S511, the copy application 214 determines whether scanning start preparation of the scanner 111 has been completed via the scanner control unit 212. The completion of the scanning start preparation means that the scanner 111 does not perform processing and is ready to start scanning immediately. For example, when the scanner 111 is performing cancellation processing, it is determined that the scanning start preparation has not been completed. When the scanning start preparation has been completed, the copy application 214 causes the processing to proceed to S305. Otherwise, the copy application 214 causes the processing to proceed to S512.

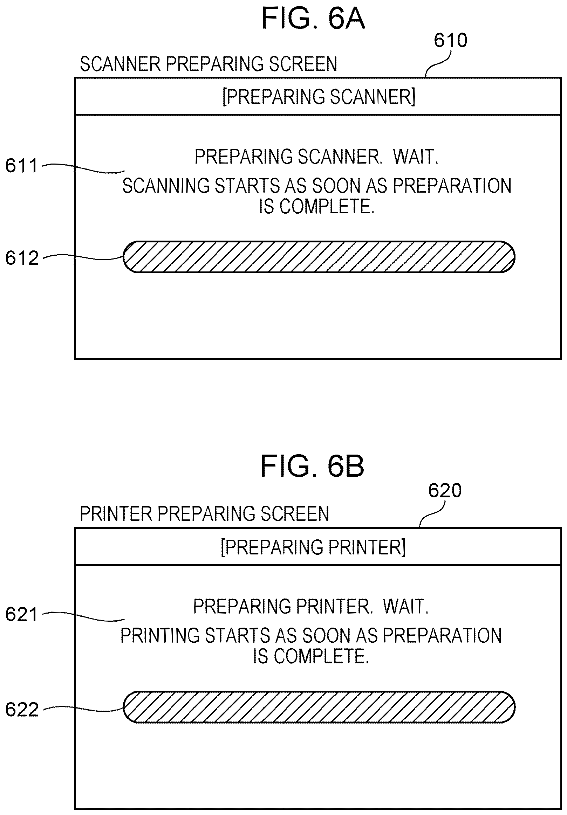

In S512, the copy application 214 displays a scanner preparing screen 610 illustrated in Fig. 6A in the operation unit 107 via the screen control unit 211. The scanner preparing screen 610 includes a message area 611 and a progress bar 612. The message area 611 is configured to display that the scanner is being prepared. The progress bar 612 indicates the progress toward the preparation of the scanner 111.

Meanwhile, in S521 as the step next to S310, the copy application 214 determines whether printing start preparation of the printer 112 has been completed via the printer control unit 213.

The completion of the printing start preparation means that the printer 112 does not perform processing and is ready to start printing immediately. For example, when the printer 112 is performing cancellation processing, it is determined that the printing start preparation has not been completed. When the printing start preparation has been completed, the copy application 214 causes the processing to proceed to S311. Otherwise, the copy application 214 causes the processing to proceed to S522.

In S522, the copy application 214 displays a printer preparing screen 620 illustrated in Fig. 6B in the operation unit 107 via the screen control unit 211. The printer preparing screen 620 includes a message area 621 and a progress bar 622. The message area 621 is configured to display that the printer is being prepared. The progress bar 622 indicates the progress toward the preparation of the printer 112.

As has been described, according to the present embodiment, the start of redoing can be instructed without waiting for the completion of the cancellation processing. Thus, the usability is improved.

### Embodiment 3

In Embodiments 1 and 2, the processing by the copy application 214 is described as an example of the redoing processing. The copy function is a simple function that scans the original and prints the scanned original. In the copying function, it is obvious that, when the redoing is performed, the redoing is performed from the scanning. In contrast, there exist functions in which it is not obvious that, when the redoing is performed, from where the redoing is performed.

The ID card copy function is one of the example. The ID card copy function scans the front side of the ID card, and then, scans the rear side of the ID card after turning the ID card upside down. After that, printing is performed. When the rear side image of the card is unnecessary, the printing may be performed after the front side scanning without performing rear side scanning. When the redoing is performed, there are a plurality of options such as redoing from front side scanning, redoing from rear side scanning, and redoing from printing.

According to the present embodiment, an embodiment that causes, when there are a plurality of options to perform redoing, the user to select from where the redoing is performed is described with an example of processing by the ID card copy application 215.

That is, the selected job and jobs to be performed after the selected job are redone(retried). For example, when the front/rear sides of the ID card are scanned, in the case of (as a result of) selecting cancellation of the job in which the first one of the sides has been scanned, the job of the first one of the sides and the other side are to be scanned (redone). In the case of (as a result of) selecting cancellation of scanning of the other side being the next step of the first one of the sides, only the other side is to be scanned (redone). Furthermore, display prompting such redoing of the selected job and jobs to be performed after the selected job is presented.

The block diagram of Fig. 1 illustrated the hardware configuration and the block diagram of Fig. 2 illustrating the software configuration are the same as those of Embodiment 1. Thus, description of those drawings is omitted.

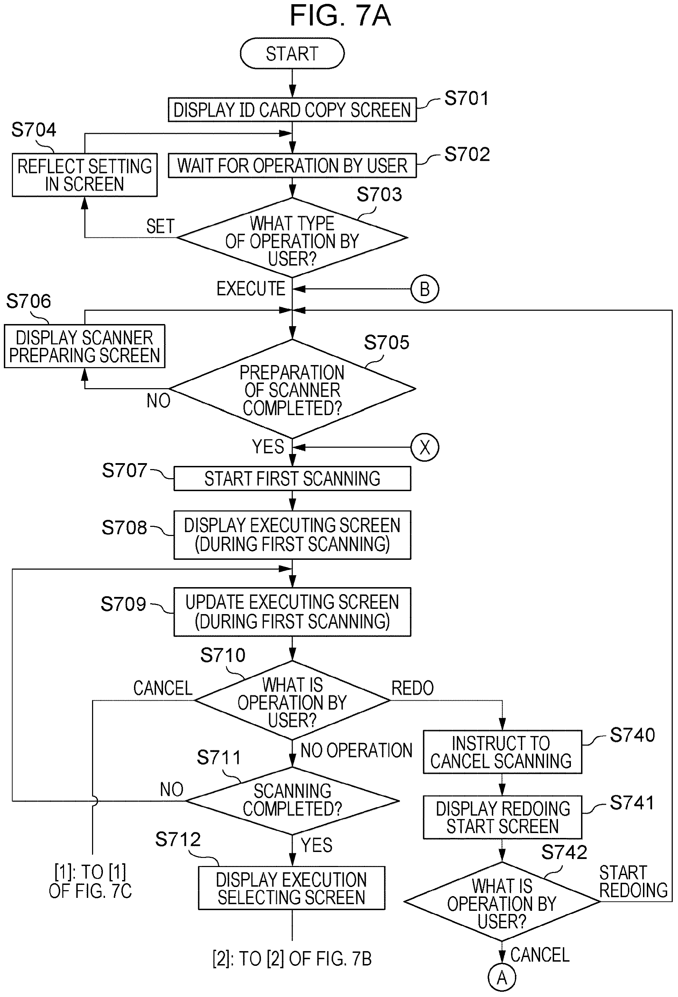

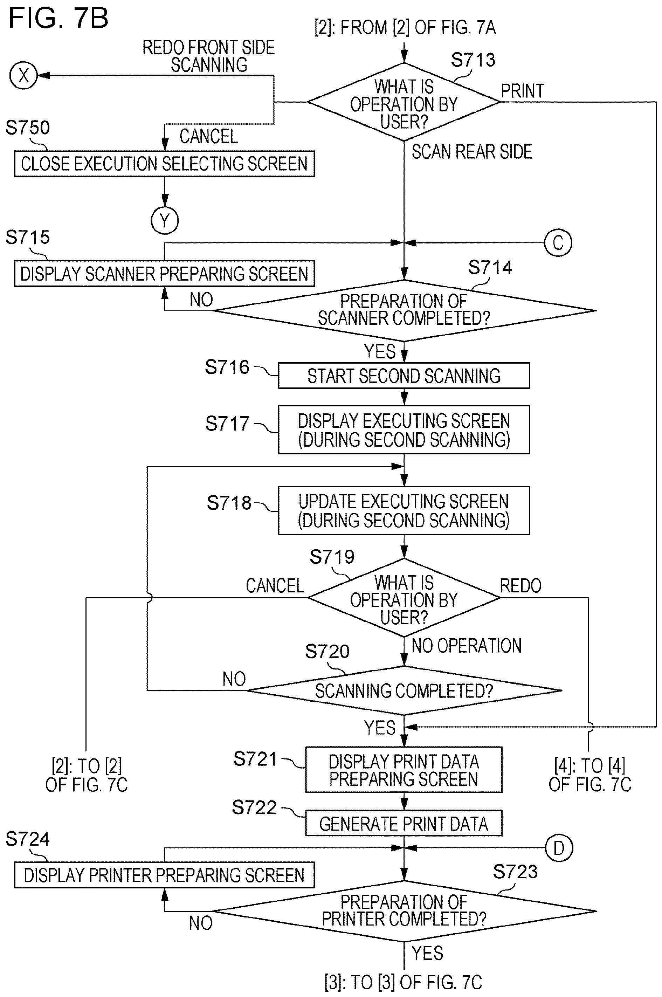

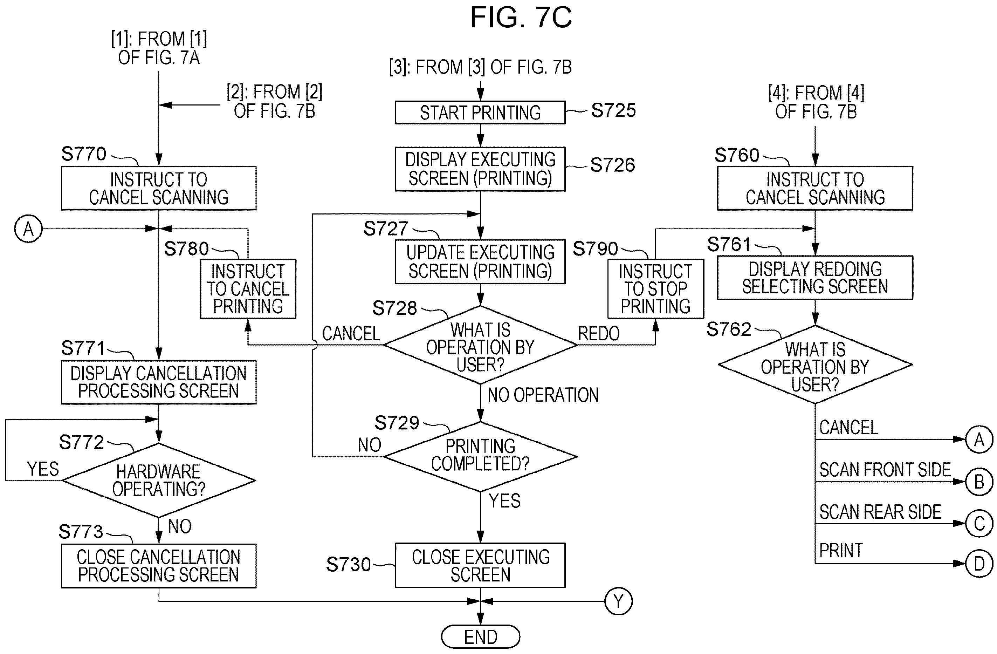

Fig. 7A to 7C are a flowchart illustrating processing by the ID card copy function executed by the image forming apparatus 100 according to the present embodiment. The flowchart illustrated in Figs. 7A to 7C is realized when the CPU 102 of the image forming apparatus reads the programs for realizing the software modules stored in the ROM 104 or HDD 105 to the RAM 103 and executes the read programs.

The flowchart illustrated in Figs. 7A to 7C starts when the screen control unit 211 detects that calling of the ID card copy application 215 is instructed by the user in a menu screen (not illustrated) displayed in the operation unit 107 and starts up the ID card copy application 215.

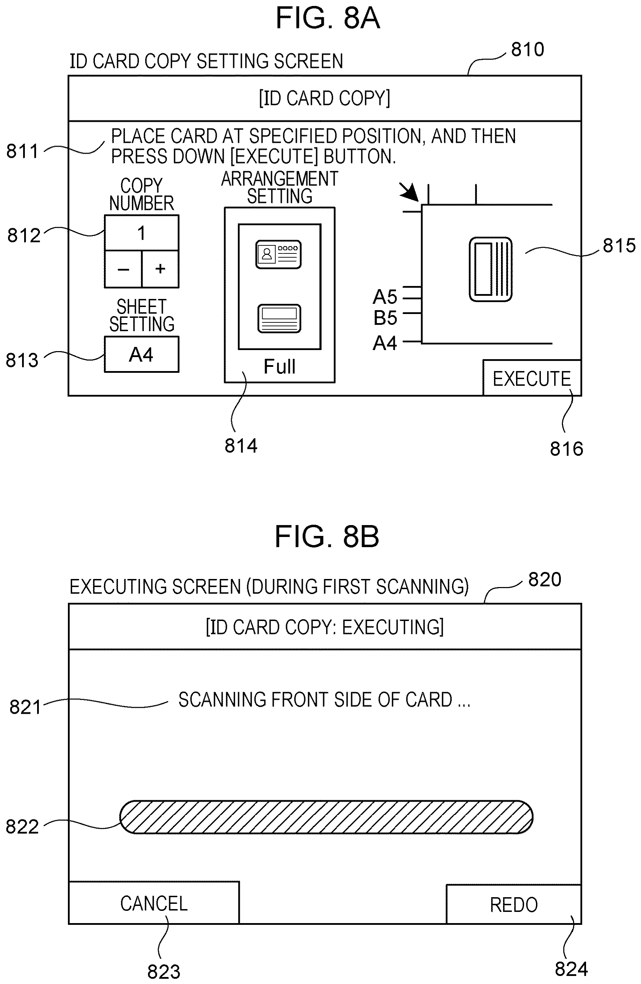

In S701, the ID card copy application 215 displays an ID card copy setting screen 810 illustrated in Fig. 8A in the operation unit 107 via the screen control unit 211. The ID card copy setting screen 810 includes a message area 811, a copy number setting 812, a sheet size setting 813, an arrangement setting 814, a guide display 815, and an execute button 816.

In the message area 811, a message helpful for the operation by the user is displayed. The copy number setting 812 is a component for displaying the setting of the number of copies and setting the number of copies. The user uses a "+" button and a "-" button to change the setting of the number of copies. The sheet size setting 813 is a component for displaying the setting of the print sheet size and setting the print sheet size.

The sheet size setting 813 uses a button. When the button is pressed down, a screen (not illustrated) for selecting the print sheet size is displayed. The arrangement setting 814 is a component for displaying setting of how the front and rear sides of the ID card are arranged in the print sheet and the setting of the arrangement.

The arrangement setting 814 uses a button. When the button is pressed down, a screen (not illustrated) for selecting the arrangement setting is displayed. The guide display 815 illustrates at what position the ID card is to be placed on the original table. The guide display 815 updates the position of the ID card to an appropriate position in accordance with settings.

Referring back to the description of the flowchart, in S702, the ID card copy application 215 waits for operation by the user via the screen control unit 211. When the detected type of the operation by the user is "SET" in S703, the ID card copy application 215 causes the processing to proceed to S704. When the detected type of the operation by the user is "EXECUTE", the ID card copy application 215 causes the processing to proceed to S705.

When the type of the operation by the user is "SET", for example, the following operation for the ID card copy function is performed: an increase/decrease in the number of copies at the copy number setting 812, selection of the sheet size in a screen (not illustrated) after the sheet size setting 813 has been pressed down, or the like. In S704, the ID card copy application 215 reflects the setting value having been set by the operation by the user in the screen and returns to S702.

When the type of the operation by the user is "EXECUTE", this operation corresponds to pressing down of the execute button 816.

For example, in addition to the pressing down of the execute button 816, a physical execute button provided in an operation unit 107 may be pressed down.

In S705, the ID card copy application 215 determines whether scanning start preparation of the scanner 111 has been completed via the scanner control unit 212. When the scanning start preparation has been completed, the ID card copy application 215 causes the processing to proceed to S707. Otherwise, the ID card copy application 215 causes the processing to proceed to S706.

In S706, the ID card copy application 215 displays the scanner preparing screen 610 illustrated in Fig. 6A in the operation unit 107 via the screen control unit 211. According to the present embodiment, the same screen is displayed in the copy function and the ID card copy function while the scanner 111 is being prepared. However, specific scanner preparing screens may be separately provided for the copy function and the ID card copy function.

In S707, the ID card copy application 215 starts first scanning (scanning of the front side) with the scanner 111 via the scanner control unit 212. In S708, the ID card copy application 215 displays an executing screen 820 illustrated in Fig. 8B in the operation unit 107 via the screen control unit 211. The executing screen 820 is an example of the executing screen displayed while the first scanning is being executed.

The executing screen 820 includes a message area 821, a progress bar 822, a cancel button 823, and a redo button 824. In the message area 821, a message indicating the situation during execution is displayed. The progress bar 822 indicates the progress of the job and is updated as needed in accordance with the progress. The cancel button 823 is configured to instruct to cancel the job. The redo button 824 is configured to instruct to redo the job.

Referring back to the description of the flowchart, in S709, the ID card copy application 215 updates the executing screen 820 in accordance with the progress of the scanning. In S710, the ID card copy application 215 determines operation by the user via the screen control unit 211. When the cancel button 823 is pressed down, the ID card copy application 215 causes the processing to proceed to S770. When the redo button 824 is pressed down, the ID card copy application 215 causes the processing to proceed to S740. When no operation is performed, the ID card copy application 215 causes the processing to proceed to S711.

In S711, the ID card copy application 215 determines whether the scanning started in S707 has been completed via the scanner control unit 212. When the scanning has been completed, the ID card copy application 215 causes the processing to proceed to S712. Otherwise, the ID card copy application 215 causes the processing to return to S709.

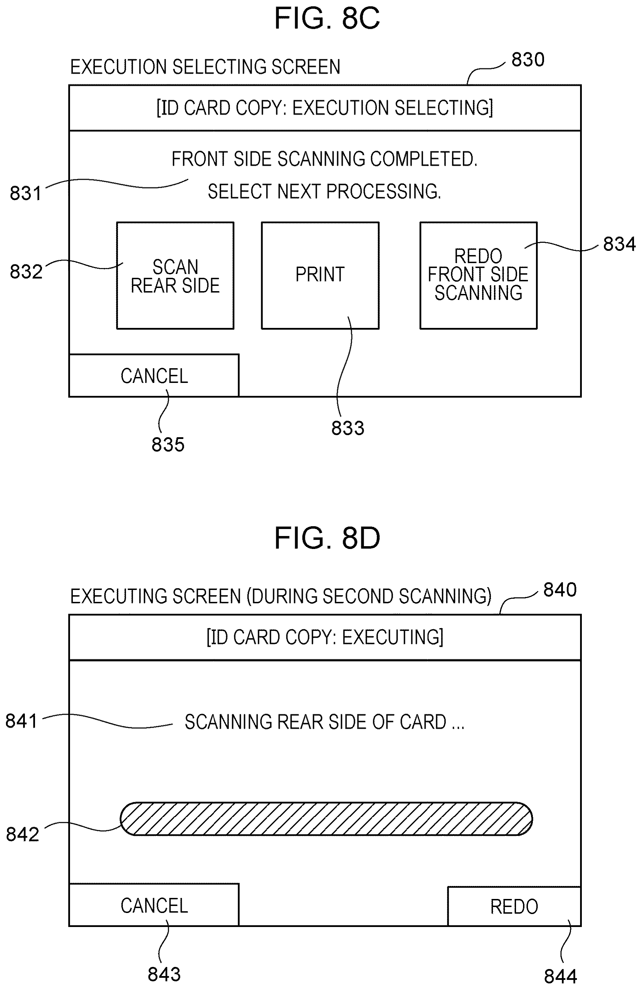

In S712, the ID card copy application 215 displays an execution selecting screen 830 illustrated in Fig. 8C in the operation unit 107 via the screen control unit 211. The execution selecting screen 830 is configured to allow the user to select what to do as the next processing after the first scanning has been completed. The execution selecting screen 830 includes a message area 831, a scan rear side button 832, a print button 833, a redo front side scanning button 834, and a cancel button 835. The message area 831 is configured to display description of the screen.

The scan rear side button 832 is configured to instruct to start second scanning. The print button 833 is configured to instruct to start printing. When the print button 833 is selected, printing is performed only with the image data acquired through the first scanning without performing the second scanning. The redo front side scanning button 834 is configured to instruct to redo the first scanning. The cancel button 835 is configured to instruct to cancel the job.

In S713, the ID card copy application 215 determines operation by the user via the screen control unit 211. When the scan rear side button 832 is pressed down, the ID card copy application 215 causes the processing to proceed to S714. When the print button 833 is pressed down, the ID card copy application 215 causes the processing proceed to S721. When the redo front side scanning button 834 is pressed down, the ID card copy application 215 causes the processing to proceed to S707. When the cancel button 835 is pressed down, the ID card copy application 215 causes the processing to proceed to S750. In S750, the ID card copy application 215 closes the execution selecting screen 830 via the screen control unit 211 to end the flowchart.

In S714, the ID card copy application 215 determines whether scanning start preparation of the scanner 111 has been completed via the scanner control unit 212. When the scanning start preparation has been completed, the ID card copy application 215 causes the processing to proceed to S716. Otherwise, the ID card copy application 215 causes the processing to proceed to S715.

In S715, the ID card copy application 215 displays the scanner preparing screen 610 illustrated in Fig. 6A in the operation unit 107 via the screen control unit 211.

In S716, the ID card copy application 215 starts the second scanning (scanning of the rear side) with the scanner 111 via the scanner control unit 212. In S717, the ID card copy application 215 displays an executing screen 840 illustrated in Fig. 8D in the operation unit 107 via the screen control unit 211. The executing screen 840 is an example of the executing screen displayed while the second scanning is being executed.

The executing screen 840 includes a message area 841, a progress bar 842, a cancel button 843, and a redo button 844. In the message area 841, a message indicating the situation during execution is displayed. The progress bar 842 indicates the progress of the job and is updated as needed in accordance with the progress. The cancel button 843 is configured to instruct to cancel the job. The redo button 844 is configured to instruct to redo the job.

Referring back to the description of the flowchart, in S718, the ID card copy application 215 updates the executing screen 820 in accordance with the progress of the scanning. In S719, the ID card copy application 215 determines operation by the user via the screen control unit 211. When the cancel button 843 is pressed down, the ID card copy application 215 causes the processing to proceed to S770. When the redo button 844 is pressed down, the ID card copy application 215 causes the processing to proceed to S760. When no operation is performed, the ID card copy application 215 causes the processing to proceed to S720.

In S720, the ID card copy application 215 determines whether the scanning started in S716 has been completed via the scanner control unit 212. When the scanning has been completed, the ID card copy application 215 causes the processing to proceed to S721. Otherwise, the ID card copy application 215 causes the processing to return to S718.

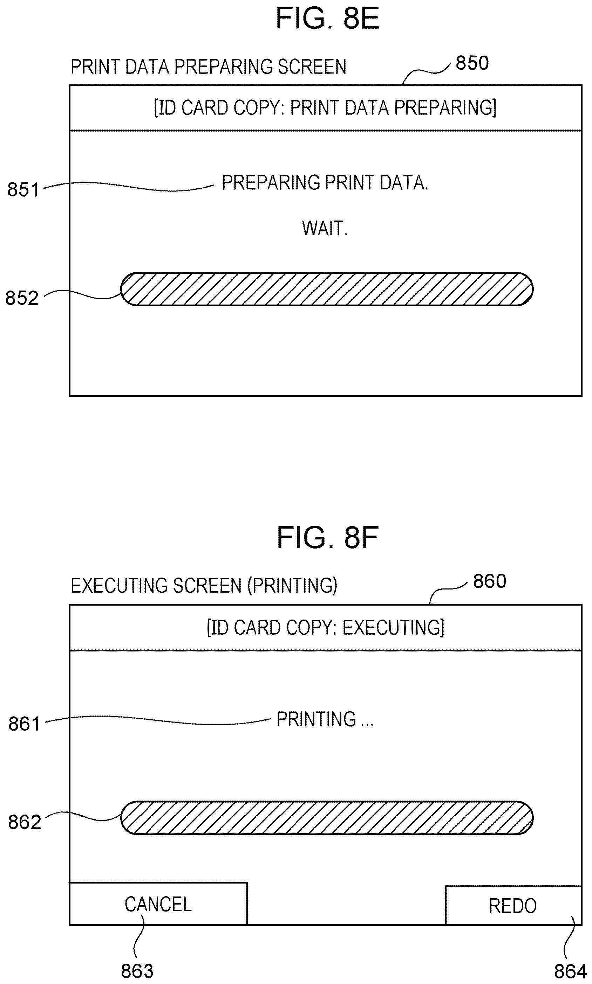

In S721, the ID card copy application 215 displays the print data preparing screen 850 illustrated in Fig. 8E in the operation unit 107 via the screen control unit 211. The print data preparing screen 850 includes a message area 851 and a progress bar 852. In the message area 851, a message indicating that the print data is being prepared is displayed. The progress bar 852 indicates the progress of the preparation of the print data and is updated as needed in accordance with the progress.

In S722, the ID card copy application 215 generates the print data of the image data acquired through the first scanning (S707 to S711) and, when the second scanning (S716 to S720) is performed, the image data of the second scanning in addition to the image data of the first scanning.

In S723, the ID card copy application 215 determines whether printing start preparation of the printer 112 has been completed via the printer control unit 213. When the printing start preparation has been completed, the ID card copy application 215 causes the processing to proceed to S725. Otherwise, the ID card copy application 215 causes the processing to proceed to S724.

In S724, the ID card copy application 215 displays the printer preparing screen 620 illustrated in Fig. 6B in the operation unit 107 via the screen control unit 211. According to the present embodiment, the same screen is displayed in the copy function and the ID card copy function while the printing is being prepared. However, specific printing preparing screens may be separately provided for the copy function and the ID card copy function.

In S725, the ID card copy application 215 starts printing with the printer 112 via the printer control unit 213. In S726, the ID card copy application 215 displays an executing screen 860 illustrated in Fig. 8F in the operation unit 107 via the screen control unit 211. The executing screen 860 is an example of the executing screen displayed while printing is being executed.

The executing screen 860 includes a message area 861, a progress bar 862, a cancel button 863, and a redo button 864. In the message area 861, a message indicating the situation during execution is displayed. The progress bar 862 indicates the progress of the job and is updated as needed in accordance with the progress. The cancel button 863 is configured to instruct to cancel the job.

The redo button 864 is configured to instruct to redo the job. In S727, the ID card copy application 215 updates the executing screen in accordance with a printing situation.

In S728, the ID card copy application 215 determines operation by the user via the screen control unit 211. When the cancel button 863 is pressed down, the processing proceeds to S780. When the redo button 864 is pressed down, the processing proceeds to S790. When no operation is performed, the processing proceeds to S729.

In S780, the ID card copy application 215 instructs the printer 112 to cancel the printing via the printer control unit 213 and causes the processing to proceed to S771. The processing in and after S771 will be described later.

In S790, the ID card copy application 215 instructs the printer 112 to cancel the printing via the printer control unit 213 and causes the processing to proceed to S761. The processing in and after S761 will be described later.

In S729, the ID card copy application 215 determines whether the printing started in S725 has been completed via the printer control unit 213. When the printing has been completed, the ID card copy application 215 causes the processing to proceed to S730. Otherwise, the ID card copy application 215 causes the processing to return to S727.

In S730, the ID card copy application 215 closes the executing screen 860 and the flowchart ends.

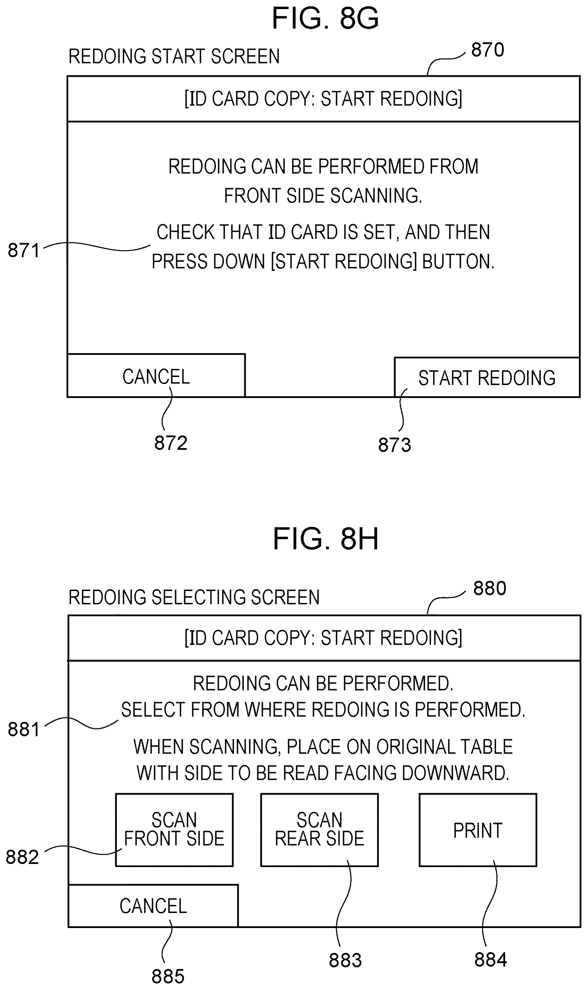

Meanwhile, in S740, the ID card copy application 215 instructs the scanner 111 to cancel the scanning via the scanner control unit 212. In S741, the ID card copy application 215 displays a redoing start screen 870 illustrated in Fig. 8G in the operation unit 107 via the screen control unit 211. The redoing start screen 870 includes a message area 871, a cancel button 872, and a start redoing button 873.

The message area 871 is configured to display that the redoing can be started from the scanning of the front side (first scanning). The message area 871 also displays operation able to be performed by the user for the redoing. The cancel button 872 is configured to instruct to cancel the redoing and end the job. The start redoing button 873 is configured to instruct to start the redoing of the job.

In S742, the ID card copy application 215 determines operation by the user via the screen control unit 211. When the cancel button 872 is pressed down, the ID card copy application 215 causes the processing to proceed to S771. When the start redoing button 873 is pressed down, the ID card copy application 215 causes the processing to proceed to S705 and waits for the completion of the preparation of the scanner 111.

Meanwhile, in S760, the ID card copy application 215 instructs the scanner 111 to cancel the scanning via the scanner control unit 212. In S761, the ID card copy application 215 displays a redoing start screen 880 illustrated in Fig. 8H in the operation unit 107 via the screen control unit 211. The redoing selecting screen 880 includes a message area 881, a scan front side button 882, a scan rear side button 883, a print button 884, and a cancel button 885.

The message area 881 is configured to display that the redoing can be started. The message area 881 also displays operation able to be performed by the user for the redoing. The scan front side button 882 is configured to instruct to redo from the front side scanning (first scanning). The scan rear side button 883 is configured to instruct to redo from the rear side scanning (second scanning). The print button 884 is configured to instruct to redo from the printing. The cancel button 885 is configured to instruct to cancel the redoing and end the job.

In S762, the ID card copy application 215 determines operation by the user via the screen control unit 211. When the cancel button 885 is pressed down, the ID card copy application 215 causes the processing to proceed to S771. When the scan front side button 882 is pressed down, the ID card copy application 215 causes the processing proceed to S705. When the scan rear side button 883 is pressed down, the ID card copy application 215 causes the processing to proceed to S714. When the print button 885 is pressed down, the ID card copy application 215 causes the processing to proceed to S723.

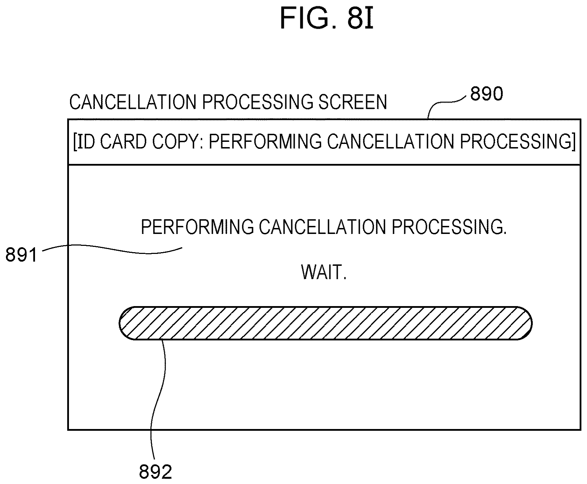

Meanwhile, in S770, the ID card copy application 215 instructs the scanner 111 to cancel the scanning via the scanner control unit 212. In S771, the ID card copy application 215 displays a cancellation processing screen 890 illustrated in Fig. 8I in the operation unit 107 via the screen control unit 211. The cancellation processing screen 890 includes a message area 891 and a progress bar 892. The message area 891 is configured to display that the cancellation processing is being performed. The progress bar 892 indicates the progress of the cancellation processing.

In S772, the ID card copy application 215 determines whether the hardware such as the scanner 111 or the printer 112 is performing cancellation processing. When the cancellation processing is being performed, the ID card copy application 215 waits for the completion of the cancellation processing. When the cancellation processing has been completed, the ID card copy application 215 causes the processing to proceed to S773.

In S773, the ID card copy application 215 closes the cancellation processing screen 890 and the flowchart ends.

As has been described, according to the present embodiment, when there are a plurality of options to perform redoing, the user can select from where the redoing is performed, and the usability is improved.

### Different Embodiments

The present disclosure may be a control program configured to realize one or more of the above-described embodiments to be executed by a computer. The present disclosure may be a recording medium in which this control program is stored.

The present disclosure is not limited to the above-described embodiments. Various modifications (including organic combinations of the embodiments) are possible based on the gist of the present disclosure. These modifications are not excluded from the scope of the present disclosure. That is, configurations made by combining the above-described embodiments and their modifications are included in the present disclosure.

The present disclosure allows the user to perform redoing operation without waiting for the completion of the cancellation processing in an information processing apparatus including a driver. Thus, the usability is improved.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (100) comprising:
a drive unit (101); and
a display unit (211),
wherein, based on an instruction to retry a job that is being executed by the drive unit, processing of the drive unit in accordance with the job is cancelled, and information about the retrying of the job is displayed by the display unit, and
wherein, based on an instruction to start the retrying of the job, the job is retried.

2. The information processing apparatus according to claim 1,
wherein, during the execution of the job, the display unit displays a cancel button configured to cancel the job and a retry button configured to retry the job.

3. The information processing apparatus according to claim 2,
wherein the display unit uses a single button to display the cancel button and the retry button.

4. The information processing apparatus according to any one of claims 1 to 3,
wherein the display unit provides a display that allows selection of a job to be retried from a plurality of options of jobs to be retried.

5. The information processing apparatus according to claim 4,
wherein, based on a result of the selection of the job to be retried, information on the selected job and a job to be executed after the selected job is displayed by the display unit, and
wherein, based on the instruction to start the retrying of the job, the selected job and the job to be executed after the selected job is retried.

6. The information processing apparatus according to any one of the preceding claims, further comprising:
a scanner unit or a printer unit,
wherein the scanner unit or the printer unit is used for the job.

7. The information processing apparatus according to any one of the preceding claims,
wherein the job is an ID card copy job.

8. The information processing apparatus according to claim 7, when dependent through claim 4,
wherein the job is to scan or copy a front side and a rear side of the ID card, and
wherein the plurality of options are jobs to scan or copy one of the front side and the rear side of the ID card.

9. A method for controlling an information processing apparatus, the method comprising:
based on an instruction to retry a job that is being executed by a drive unit, cancelling processing of the drive unit in accordance with the job and displaying information about the retrying by a display unit, and,
based on an instruction to start the retrying of the job, retrying the job.

10. A computer program comprising instructions which, when the program is executed by a computer, cause the computer to carry out the method of claim 9.
